# EUROPEAN PATENT SPECIFICATION

(11) **EP 2 128 485 B1**
(45) Date of publication and mention of the grant of the patent: **20.05.2015**
(21) Application number: 08720893.0
(22) Date of filing: 20.02.2008
(51) Int. Cl.: F16G 1/00, C08K 7/22, C08L 21/00, F16G 1/08, F16G 5/20

(54) **FRICTION TRANSMISSION BELT**
REIBGETRIEBERIEMEN
COURROIE DE TRANSMISSION À FRICTION

(30) Priority: 23.02.2007 WO PCT/JP2007/053987
(43) Date of publication of application: 02.12.2009
(73) Proprietor: THE GATES CORPORATION, Denver, CO 80202 (US)
(72) Inventor: FURUKAWA, Satoshi, Yamatokoriyama-shi Nara 639-1032 (JP); KOJIMA, Toshihiko, Yamatokoriyama-shi Nara 639-1032 (JP); IWAKIRI, Takashi, Yamatokoriyama-shi Nara 639-1032 (JP); YAMAMOTO, Kazuma, Yamatokoriyama-shi Nara 639-1032 (JP)
(74) Representative: Tunstall, Christopher Stephen
(86) International application number: PCT/JP2008/053344
(87) International publication number: WO 2008/102911

(56) References cited:
- EP-A1- 0 547 880
- EP-A1- 2 105 460
- EP-A2- 0 686 714
- EP-A2- 1 760 360
- DE-A1- 10 314 493
- JP-A- 2000 039 049
- JP-A- 2000 039 049
- JP-A- 2006 183 805
- JP-A- 2006 183 805
- JP-U- 61 156 754
- US-A- 5 853 849
- "Standard Classification System for Carbon Blacks Used in Rubber Products", ASTM DESIGNATION, ASTM INTERNATIONAL, US, no. D 1765-01, 1 March 2001 (2001-03-01), pages 330-334, XP008150458, DOI: 10.1520/D1765-10

## Description

### Field of The Invention

The present invention relates to a belt used for an automotive engine, general industrial power transmission machinery, and so on, especially to a friction transmission belt which can be prevented from producing an abnormal noise.

### Background of the Invention

In automobiles, general industrial power transmission machinery, and so on, friction transmission belts such as V-belts, V-ribbed belts, and flat belts, are widely used for power transmission.

It is not uncommon to have an abnormal noise emanate from a friction transmission belt in normal use. Such an abnormal noise may even be generated when the friction transmission belt and pulleys operate without malfunction. For example, in a case where water accumulates on a smooth surface of a friction transmission belt which has been in use for a long period of time, the trend of abnormal noise generation is remarkable. This is because when the friction transmission belt slips due to a water film generated on the friction contact surfaces of a pulley and the friction transmission belt, later on, a water film disappears and then the pulley re-starts rotating, an abnormal noise is easily produced at the time when the water is drained.

A user of a friction transmission belt often regards the occurrence of the abnormal noise to be problematic; therefore, for example in an automobile in which a friction transmission belt is in use, countermeasures are undertaken to prevent water from accumulating on the friction transmission belt because it is a primary cause of an abnormal noise coming from the transmission belt. However, it is difficult to completely prevent an abnormal noise caused by water, therefore, developing a friction transmission belt that does not make abnormal noises, even in the presence of water, is desired not only by a user of a friction transmission belt, but by auto manufacturers as well.

JP 2006-183805 discloses a rubber layer material for a friction transmission belt containing a carbon black with a nitrogen adsorption specific surface area is equal to or larger than 70 m²/g, and another carbon black with a nitrogen adsorption specific surface area of less than 70 m²/g.

EP 1 760 360 A2 is prior art under Article 54(3) EPC and discloses a rubber layer material for a power transmission belt which includes carbon black with a nitrogen adsorption specific surface area of from 65 to 125 m²/g.

EP 2 105 460 A1 is prior art under Article 54(3) EPC and discloses a rubber composition for a transmission belt which includes a furnace carbon black with a nitrogen adsorption specific surface area of not less than 75 m²/g.

The European patent publication EP0686714 A2 discloses, inter alia, a v-ribbed power transmission belt according to the preamble of claim 1.

### Summary of the Invention

The objective of the present invention is to provide a friction transmission belt which can prevent the generation of an abnormal noise in spite of the presence of water is thereon.

The present invention provides a rubber layer material for forming a rubber layer of a friction transmission belt, said rubber layer having a friction surface; characterised by: said rubber layer material comprising only one kind of carbon black whose average nitrogen adsorption surface area (ASTM D1765-01) is between 40 and 49 m²/g, said rubber layer material making said friction surface uneven due to the addition of said carbon black to said rubber layer to drain water so that slippage of said friction transmission belt caused by water accumulating on said friction surface is prevented, wherein said rubber layer further comprises a diatomaceous earth.

The present invention also provides a friction transmission belt comprising a rubber layer having a friction surface, wherein the rubber layer is formed of the rubber layer material recited above.

The rubber layer preferably includes short fibers. The rubber layer may be formed from a rubber comprising an EPDM (Ethylene Propylene Terpolymer).

The friction transmission belt may further include an adhesive rubber layer bonded to the rubber layer, with a tension member embedded in the adhesive rubber layer.

### Brief Description of the Drawings

The present invention will be better understood from the description of the preferred embodiments of the invention set forth below, together with the accompanying drawings in which:
Fig. 1 is a sectional view of a V-ribbed belt of the first embodiment;
Fig. 2 is a magnified image of a friction surface of a bottom rubber layer of a V-ribbed belt that has been in use for a predetermined time and was manufactured from a rubber layer material of working example 1;
Fig. 3 is a magnified image of a friction surface of a bottom rubber layer of a V-ribbed belt that has been in use for a predetermined time and was manufactured from a rubber layer material of working example 2;
Fig. 4 is a magnified image of a friction surface of a bottom rubber layer of a V-ribbed belt that has been in use for a predetermined time and was manufactured from a rubber layer material of comparative example 1;
Fig. 5 is a magnified image of a friction surface of a bottom rubber layer of a V-ribbed belt that has been in use for a predetermined time and was manufactured from a rubber layer material of comparative example 2;
Fig. 6 is a view representing the results of the first water pouring slippage test of a previously used V-ribbed belt of working example 1;
Fig. 7 is a view representing the results of the first water pouring slippage test of a previously used V-ribbed belt of working example 2;
Fig. 8 is a view representing the results of the first water pouring slippage test of a previously used V-ribbed belt of comparative example 1;
Fig. 9 is a view representing the results of the second water pouring slippage test of a previously used V-ribbed belt of working example 1;
Fig. 10 is a view representing the results of the second water pouring slippage test of a previously used V-ribbed belt of working example 2;
Fig. 11 is a view representing the results of the second water pouring slippage test of a previously used V-ribbed belt of comparative example 1; and
Fig. 12 is a view representing the results of the second water pouring slippage test of a previously used V-ribbed belt of comparative example 2.

### Detailed Description of the Preferred Embodiments

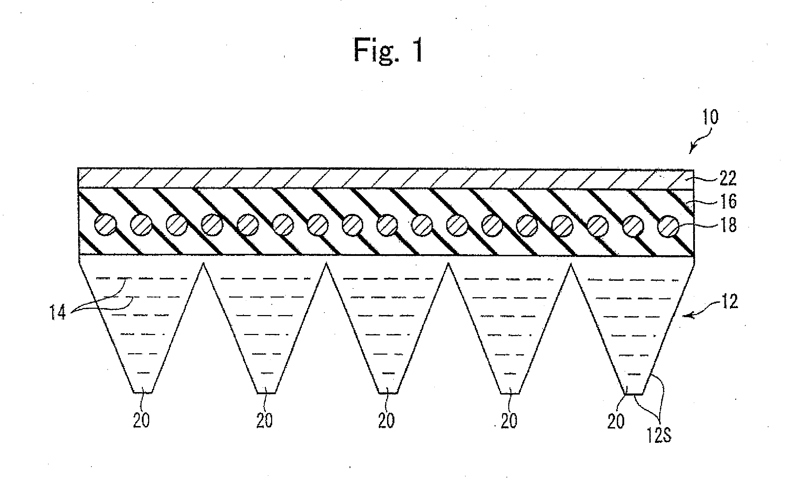

Hereinafter, the first embodiment of the present invention is explained with reference to the attached figures. Fig. 1 is a cross-sectional view of a V-ribbed belt 10.

The V-ribbed belt 10 (a friction transmission belt) includes a bottom rubber layer 12, an adhesive rubber layer 16, and a fabric 22. The bottom rubber layer 12 and the fabric 22 are provided on the surfaces of the V-ribbed belt 10. The adhesive rubber layer 16 is layered on the bottom rubber layer 12, and the surface of the adhesive rubber layer 16 is covered with the fabric 22. A plurality of V-ribs 20 are formed on the bottom rubber layer 12. The V-ribs 20 are extending along the longitudinal direction of the V-ribbed belt 10, and are arranged along the width direction of the V-ribbed belt 10. The surfaces of the V-ribs 20, that is, the surfaces 12S of the bottom rubber layer 12, are friction surfaces that engage a pulley (not shown). Many short fibers 14 are included in the bottom rubber layer 12. The short fibers 14 are oriented roughly parallel to the width direction of the V-ribbed belt 10. A part of the short fibers 14 protrude from the side surfaces of the V-ribs 20, or from the friction surface 12S of the bottom rubber layer 12. A cord 18 (a tension member) is embedded near the center of the adhesive rubber layer 16.

Next, the formulations of the bottom rubber layer 12 are explained. Table 1 represents formulations of the rubber layer materials used for forming the bottom rubber layer 12 in the working and comparative examples of the first embodiment.

**Table 1 FORMULATIONS OF THE RUBBER LAYER MATERIALS (*)**

| | RUBBER MATERIAL | REINFORCEMENT (CARBON BLACK) | | | GRAPHITE | SHORT FIBER | |
|---|---|---|---|---|---|---|---|
| | EPDM | HAF | FEF | SRF | | NYLON 66 | COTTON |
| WORKING EXAMPLE 1 | 100 | 0 | 60 | 0 | 15 | 10 | 10 |
| WORKING EXAMPLE 2 | 100 | 50 | 0 | 0 | 15 | 15 | 10 |
| COMPARATIVE EXAMPLE 1 | 100 | 60 | 0 | 0 | 0 | 25 | 0 |
| COMPARATIVE EXAMPLE 2 | 100 | 0 | 0 | 50 | 15 | 15 | 10 |

| | | | | | | | |
|---|---|---|---|---|---|---|---|
| (*) ALL UNIT IS WEIGHT PART | | | | | | | |

In all working and comparative examples, the rubber layer materials include 100 weight parts of EPDM (Ethylene Propylene Terpolymer) as a main component. Further, every working and comparative example includes a carbon black as a reinforcement to improve the rubber strength and modulus characteristics of the rubber. In working example 1, 60 weight parts of an FEF (the code N500 equivalent of ASTM D1765-01 with an average nitrogen adsorption surface area of 40 to 49 (m²/g)), in working example 2 and comparative example 1, 50 or 60 weight parts of an HAF (the code N300 equivalent of ASTM D1765-01 with an average nitrogen adsorption surface area of 70 to 99 (m²/g)), and in comparative example 2, 50 weight parts of an SRF (the code N700 equivalent of ASTM D1765-01 with an average nitrogen adsorption surface area of 21 to 32 (m²/g)), are used. The rubber layer materials of working examples 1, 2 and of comparative example 2 include 15 weight parts of graphite to prevent stick-slip of the V-ribbed belt 10 under steady-state operation.

In the rubber layer materials of each working and comparative example, the short fibers 14 (see Fig. 1) of cotton or nylon 66 are included. The water absorbent cotton assists with water removed from the friction surface. Further, in these rubber layer materials, common components such as sulfur as a vulcanizing agent and anti-aging agent, are added.

The V-ribbed belts 10 of the working and comparative examples are manufactured from the rubber layer materials represented in Fig. 1. That is, the material of the fabric 22, the material sheet for the adhesive rubber layer 16, the cord 18, and the above explained rubber layer material are wound on a cylindrical drum (not shown), which is heated and pressurized at a predetermined temperature and pressure. At the time of heating and pressurization, two material sheets of the adhesive rubber layer 16, into which the cord 18 is embedded, are wound onto the cylindrical drum so that the cord 18 is arranged inside of the adhesive rubber layer 16 (see Fig.1).

After heating and pressurizing the cylindrical drum, a vulcanized sleeve is cut to a predetermined width, and V-ribs 20 can be formed thereon by cutting a part from the bottom rubber layer. Thus the V-ribbed belt 10 including the bottom rubber layer 12, the adhesive rubber layer 16, the cord 18, and the fabric 22 (see Fig.1) is manufactured.

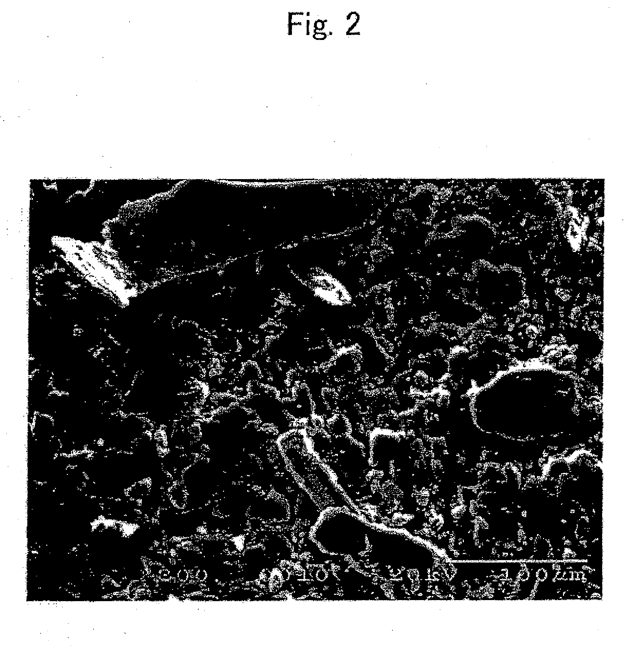

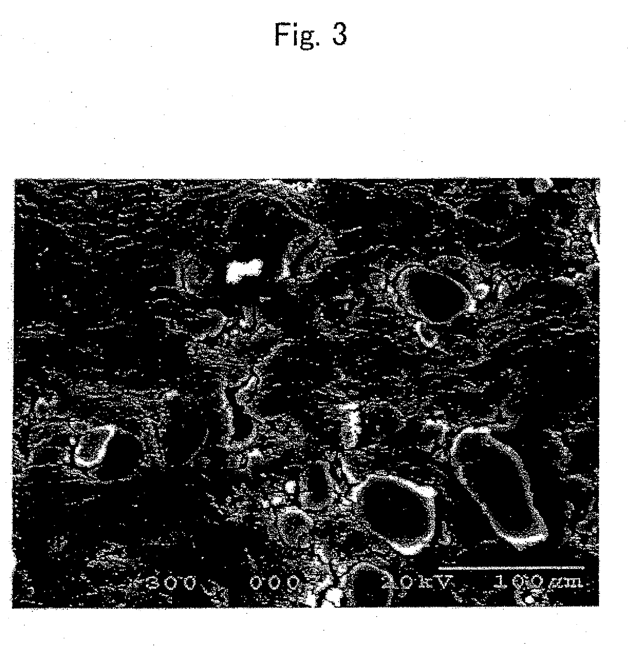

Next, the surface shape of the bottom rubber layer 12 that is formed from the rubber layer materials of the working and comparative examples is explained. Fig. 2 is a magnified image of the friction surface 12S of the bottom rubber layer 12, that is, the friction surface of the V-ribbed belt 10 manufactured from the rubber layer material of working example 1 and subjected to use for a predetermined time. Figs. 3 to 5 are magnified images of working example 2, and comparative examples 1 and 2, respectively, which correspond to Fig. 2.

Note that the conditions of the above mentioned predetermined time of usage are as follows. The V-ribbed belt 10 was trained over a drive pulley and a driven pulley, both of which having a diameter of 120 mm, and a tensioner pulley with a diameter of 45 mm, the V-ribbed belt 10 was run for 24 hours at a temperature of 85 degrees Celsius, and at a rotating speed of 4900 rpm of the driven pulley. The magnified images of the friction surfaces 12S of the V-ribbed belt 10 in Figs. 2 to 5 were photographed by a SEM (a scanning type electron microscope) at 300X magnification.

Prior to use, in each of the bottom rubber layers 12 of the working and comparative examples, the short fibers 14 (see Fig. 1) protrude from the friction surface 12S of the bottom rubber layer 12, that is, from the friction surface. Therefore, the friction surface is not smooth, and in the presence of water on its surface, the water runs off and does not adhere to it, so the water is drained and no abnormal noise is emitted. However, following the predetermined time of usage, the short fibers 14 which initially protruded from the friction surface of the V-ribbed belt 10 had been worn down, thus decreasing unevenness of the friction surface in varying degrees among working and comparative examples. The resulting condition of the friction surface was maintained in order of decreasing unevenness as follows: comparative example 2, working example 1, working example 2, and comparative example 1 (see Figs. 2 to 5).

Next, the results of the first water pouring slippage test of the V-ribbed belt 10 for working examples and comparative examples are explained.

In the first water pouring slippage test, the V-ribbed belt 10 was trained over a drive pulley with a diameter of 130 mm, a tensioner pulley with a diameter of 55 mm, and a driven pulley with a diameter of 128 mm. The driven pulley was rotated at 1000 rpm. At the time, the test condition was adjusted so that the load torque applied to the driven pulley was 10.0 Nm. 30 seconds into the start of the test, water was poured onto the drive pulley at a rate of 300ml per minute, and the resulting existence or absence of slippage of the V-ribbed belt 10 was examined.

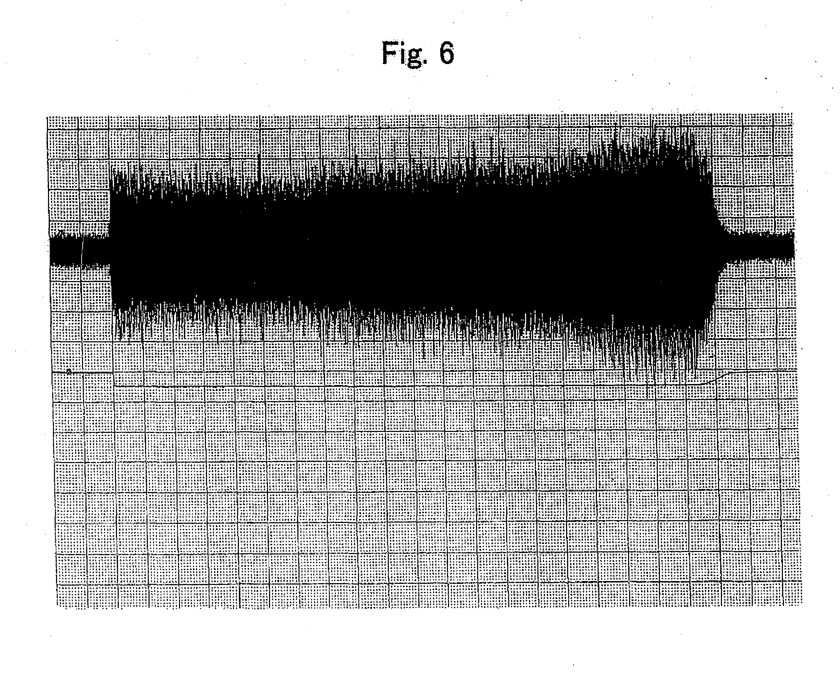

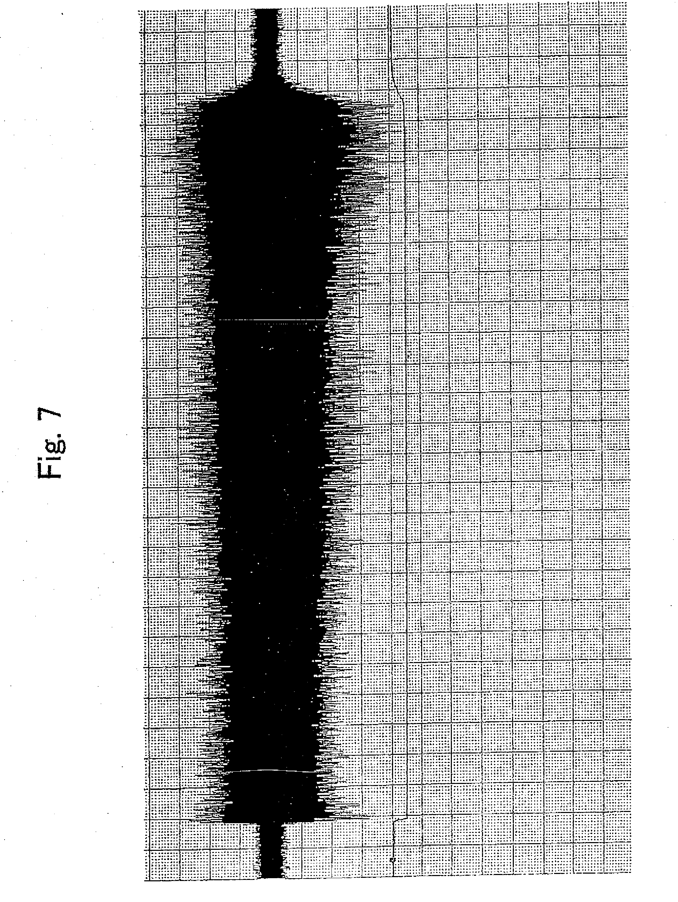

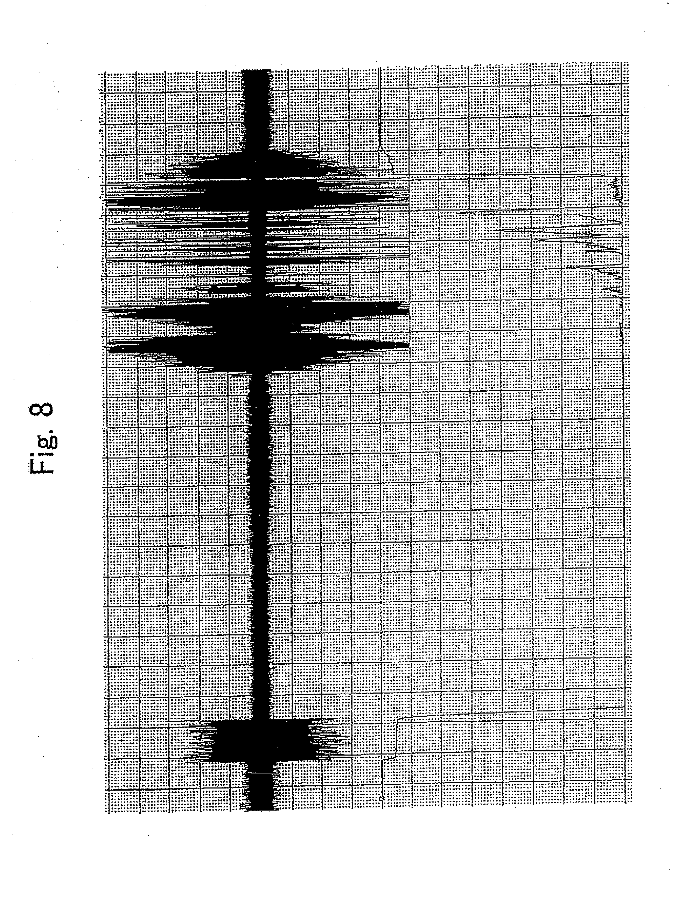

Fig. 6 represents the result of the first water pouring slippage test of the V-ribbed belt 10 of working example 1 that has been used for 24 hours under the condition of the predetermined time usage explained above. Figs. 7 and 8 represent the test results for working example 2 and comparative example 1, respectively, which correspond to those of Fig. 6.

In Figs. 6 to 8, and the following figures mentioned below, the bold line represents the voltage (sound voltage) corresponding to the magnitude of noise caused by the V-ribbed belt and detected by a microphone (not shown), and the thin line represents the number of revolutions of the driven pulley, respectively. The horizontal axes represent time.

In a comparison between the V-ribbed belt 10 of working examples 1 and 2 following usage over the predetermined amount of time, the number of revolutions of the driven pulley is approximately constant (see Figs. 6 and 7). On the other hand, comparative example 1 experienced significant V-ribbed belt 10 slippage shortly after the start of the test and water was poured onto the drive pulley, and a large decrease in the number of revolutions of the driven pulley. Afterwards, the V-ribbed belt 10 resumed running normally, and an abnormal noise was produced when the number of revolution increased (see Fig. 8).

Note that the sound voltage has been also varied in the results of the first water pouring slippage test for working examples 1 and 2 (see Figs. 6 and 7), although the magnitude of the variations of the sound voltage was smaller than those of comparative example 1 (see Fig. 8). However, the abnormal noise only occurs in comparative example 1, as explained below.

In comparative example 1, a film of water forms on the contact surface of the driven pulley and the V-ribbed belt 10 from the water poured onto the drive pulley, thus causing the V-ribbed belt 10 to slip and the pulley to idle. Following the disappearance of the water film from the surface of the V-ribbed belt 10, it suddenly resumes rotating, but causes a high frequency abnormal noise (see Fig. 8) . On the other hand, in regard to working examples 1 and 2 (see Figs. 6 and 7) the slippage of the V-ribbed belt 10 is prevented, as indicated by the number of revolutions of the driven pulley, and the high frequency abnormal noise generated in the test of comparative example 1 is avoided.

Next, the results of the second water pouring slippage test of the V-ribbed belt 10 for working examples and comparative examples are explained.

The second water pouring slippage test is carried out under the same condition as the first water pouring slippage test, except for the provision of a 5mm shim between the driven pulley and a different level on a different part of the driven pulley axis, thus slightly angling the V-ribbed belt 10 against the drive pulley. As this configuration suggests, the condition of the second water pouring slippage test is more severe than that of the first water pouring slippage test. Note that the second water pouring slippage test is carried out for the V-ribbed belt 10 of working examples 1 and 2 and comparative examples 1 and 2 after they have been in use for 24 hours under the previously explained conditions of the predetermined time usage, similar to the first water pouring slippage test.

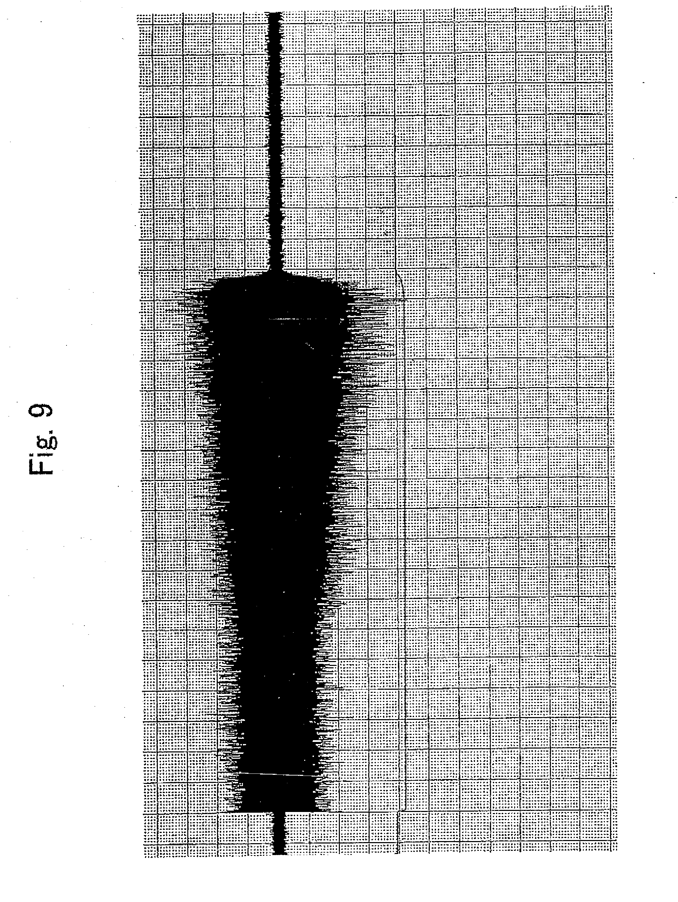

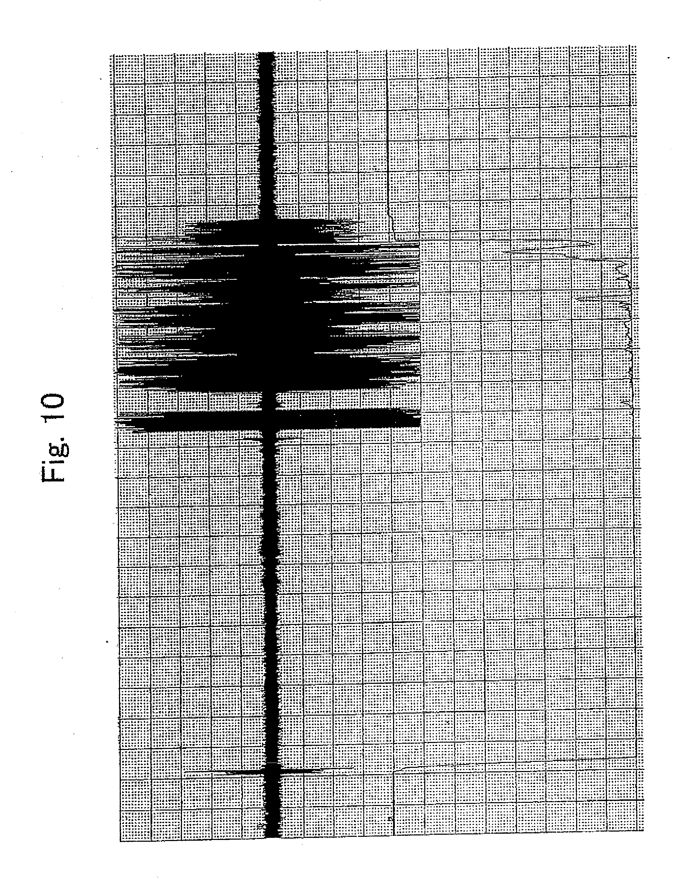

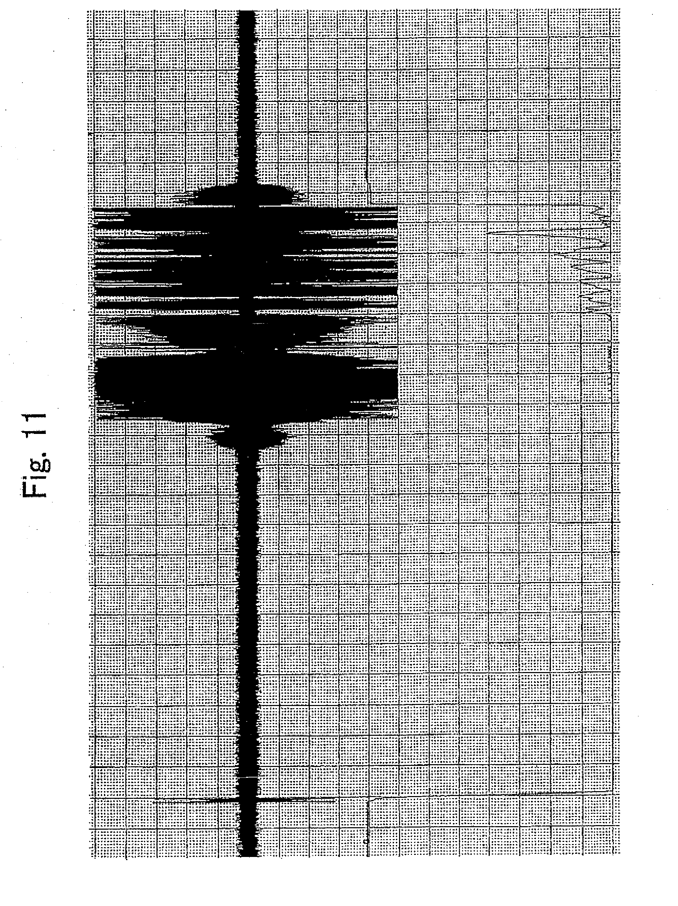

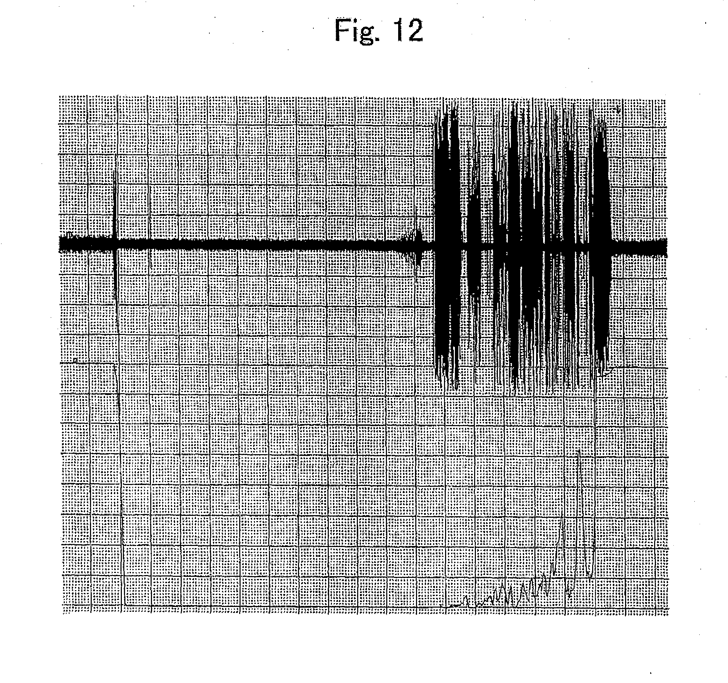

In the second water pouring slippage test, the number of revolutions of the driven pulley is approximately constant, and the V-ribbed belt 10 of working example 1 does not slip (see Fig. 9). On the other hand, with respect to working example 2 and comparative examples 1 and 2, the V-ribbed belt 10 slips shortly after starting the test due to the water poured onto the drive pulley, causing an abnormal high frequency noise to occur later on, when the V-ribbed belt 10 resumes running normally (see Figs. 10 to 12). Therefore, the V-ribbed belt 10 of working example 2 that represented good results in the first water pouring slippage test, did not represent a good result in the second water pouring slippage test, whose conditions were more severe than those of the first water pouring slippage test.

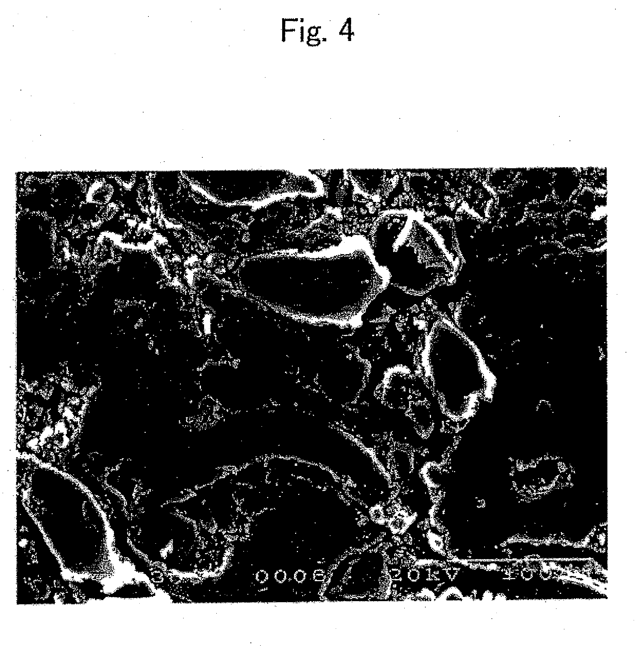

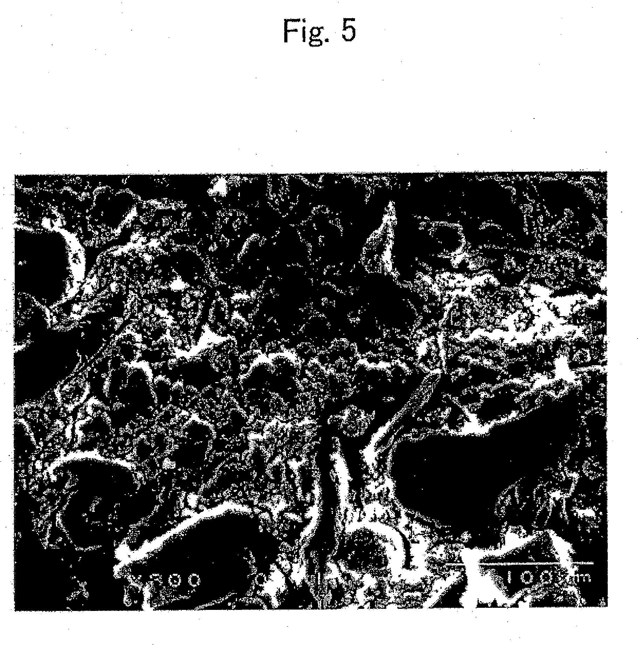

These test results validate the following facts. In comparative example 1, the film of water forms at the boundary surface between the pulley contact surface of the used V-ribbed belt 10, that is, the friction surface 12S (see Figs. 1 and 4), and the surface of the pulley, thus causing the V-ribbed belt 10 to slip. Afterwards, the film of water is maintained for a relatively long period of time because of the relatively smooth friction surface 12S, which disrupts the normal operation of the V-ribbed belt 10. In comparative example 2, although the friction surface 12S (see Fig. 5) is uneven, the V-ribbed belt 10 slips and generates abnormal noise. This is because the wear of the friction surface 12S is heavy and uneven wear is generated on the friction surface 12S.

Contrary to these comparative examples, in working examples 1 and 2 where the friction surfaces 12S on the bottom rubber layer 12 (see Figs. 2 and 3) having suitable unevenness are properly provided, water on the friction surface 12S is promptly removed, so that the V-ribbed belt 10 has excellent anti-slippage performance. As a result, the V-ribbed belt 10 of working examples is capable of preventing an abnormal noise due to slippage thereof.

As explained above, using an FEF with an average nitrogen adsorption surface area (ASTM D1765-01) between approximately 40 and 49 (m²/g) as a reinforcement, and providing minute unevenness on the friction surface 12S of the bottom rubber layer 12 for water drainage (working example 1), can effectively prevent the slippage of the V-ribbed belt 10 and the generation of abnormal noise (see Figs. 6 and 9), even under severe usage conditions where the V-ribbed belt 10 is trained over pulleys inclined towards one another. Further, because the previously used V-ribbed belt 10 of working example 1 can prevent the slippage thereof, it is apparent that the surface unevenness for water drainage can be maintained by using the FEF, even when the short fibers 14 (see Fig. 1) that contribute to maintaining the surface unevenness, that is, the short fibers 14 which protrude from the friction surface 12S of the bottom rubber layer 12, are worn down. Note that the FEF with the average nitrogen adsorption surface area between 40 and 49 (m²/g) is especially suitable as a carbon black to form the uneven surfaces for water drainage purpose, because working example 1 produced better results than those of working example 2.

Further, when HAF carbon black with average nitrogen adsorption surface area between approximately 70 and 99 (m²/g) is used, the slippage of the V-ribbed belt 10 and generation of an abnormal noise can be prevented under mild usage conditions (see Figs. 7 and 10). Therefore, by using the surface unevenness can be maintained for water drainage purposes even when the short fibers 14 protruding from the friction surface 12S are worn down.

As mentioned above, because the abnormal noise effect can be mitigated in the V-ribbed belt 10 of working examples 1 and 2 after an extended period of use, it is clear that the usage of the carbon blacks including the FEF, and HAF with average nitrogen adsorption surface areas between 33 and 99 (m²/g), excluding the SRF, can prevent belt slippage and abnormal noises.

As explained in the first embodiment, slippage of the V-ribbed belt 10 and generation of an abnormal noise can be prevented even in the presence of water accumulated on the friction surface 12S of the V-ribbed belt 10, by modifying the reinforcement included in the bottom rubber layer 12 of the V-ribbed belt 10.

Next, the second embodiment is explained. In the second embodiment, the rubber layer material to form the bottom rubber layer 12 (see Fig. 1) includes a diatomaceous earth, differing from the first embodiment. In the second embodiment, the V-ribbed belt 10 (see Fig. 1) was manufactured in the same method as one in the first embodiment, excluding the formulation of the rubber layer material.

Table 2 represents formulations of the rubber layer materials of the working and comparative examples of the second embodiment.

**Table 2 FORMULATIONS OF THE RUBBER LAYER MATERIALS (*)**

| | RUBBER MATERIAL | REINFORCEMENT (CARBON BLACK) | | | DIATOMACEOUS EARTH | | | ZEOLITE | | SHORT FIBER | COEFFICIENT OF STATIC FRICTION | |
|---|---|---|---|---|---|---|---|---|---|---|---|---|
| | EPDM | HAF | FEF | SRF | PARTICLE SIZE 9 *µ*m | PARTICLE SIZE 23.4 *µ*m | PARTICLE SIZE 43.6 *µ*m | PARTICLE SIZE 0.2mm | PARTICLE SIZE 1.25 *µ*m | NYLON 66 | PRE-USE | POST-USE |
| WORKING EXAMPLE 3 | 100 | 0 | 60 | 0 | 10 | 0 | 0 | 0 | 0 | 25 | 0.679 | 0.637 |
| WORKING EXAMPLE 4 | 100 | 0 | 60 | 0 | 15 | 0 | 0 | 0 | 0 | 25 | 0.640 | 0.795 |
| WORKING EXAMPLE 5 | 100 | 0 | 60 | 0 | 20 | 0 | 0 | 0 | 0 | 25 | 0.545 | 0.713 |
| COMPARATIVE EXAMPLE 3 | 100 | 0 | 60 | 0 | 0 | 0 | 0 | 0 | 0 | 25 | 1.031 | 0.910 |
| COMPARATIVE EXAMPLE 4 | 100 | 0 | 60 | 0 | 5 | 0 | 0 | 0 | 0 | 25 | 0.775 | 0.732 |
| COMPARATIVE EXAMPLE 5 | 100 | 0 | 60 | 0 | 40 | 0 | 0 | 0 | 0 | 25 | 0.586 | 0.595 |
| COMPARATIVE EXAMPLE 6 | 100 | 0 | 60 | 0 | 0 | 15 | 0 | 0 | 0 | 25 | 0.613 | 0.469 |
| COMPARATIVE EXAMPLE 7 | 100 | 0 | 60 | 0 | 0 | 0 | 15 | 0 | 0 | 25 | 0.578 | 0.588 |
| COMPARATIVE EXAMPLE 8 | 100 | 60 | 0 | 0 | 15 | 0 | 0 | 0 | 0 | 25 | 0.559 | 0.687 |
| COMPARATIVE EXAMPLE 9 | 100 | 60 | 0 | 0 | 40 | 0 | 0 | 0 | 0 | 25 | 0.600 | 0.779 |
| COMPARATIVE EXAMPLE 10 | 100 | 0 | 30 | 0 | 30 | 0 | 0 | 0 | 0 | 25 | 0.555 | 0.508 |
| COMPARATIVE EXAMPLE 11 | 100 | 30 | 0 | 0 | 30 | 0 | 0 | 0 | 0 | 25 | 0.630 | 0.628 |
| COMPARATIVE EXAMPLE 12 | 100 | 0 | 0 | 0 | 60 | 0 | 0 | 0 | 0 | 25 | - | - |
| COMPARATIVE EXAMPLE 13 | 100 | 0 | 60 | 0 | 0 | 0 | 0 | 15 | 0 | 25 | 0.813 | 0.671 |
| COMPARATIVE EXAMPLE 14 | 100 | 0 | 60 | 0 | 0 | 0 | 0 | 0 | 15 | 25 | 0.717 | 0.781 |

| | | | | | | | | | | | | |
|---|---|---|---|---|---|---|---|---|---|---|---|---|
| (*) ALL UNIT IS WEIGHT PART | | | | | | | | | | | | |

In working examples 3 to 5 and comparative examples 3 to 5, 0 to 40 weight parts of diatomaceous earth are used with 100 weight parts of EPDM as a rubber material, 60 weight parts of FEF carbon black, and 25 weight parts of nylon 66 (see Fig. 2). In these working and comparative examples, diatomaceous earth having an average particle size of 9 *µ* m is used.

The first water pouring slippage test explained above is carried out for each of the V-ribbed belts 10 (see Fig. 1) that were manufactured from the rubber layer materials of the working examples 3 to 5 and comparative examples 3 to 5. In all working and comparative examples of the present embodiment, the test was carried out not only for the V-ribbed belts 10 which were subjected to use for a predetermined time under the same condition as the one in the first embodiment (post-use), but also for the V-ribbed belts 10 which were not used (pre-use).

In the first water pouring slippage test, the V-ribbed belts 10 of the working examples 3 and 4 produced especially good results where there was neither slippage, nor abnormal noise. Also, the V-ribbed belts 10 of the working example 5 produced good results. That is, although a slight slippage and an abnormal noise were produced in the post-used V-ribbed belts 10 of the working example 5, the V-ribbed belts 10 of the working example 5 that was in the pre-use state produced results as good as the working examples 3 and 4.

Further, the results of these working examples 3 to 5 are superior to those of the working examples 1 and 2 of the first embodiment, in terms of the following points: In the working examples 1 and 2, when the water pouring test had been repeated many times, generation of a slippage or an abnormal noise was sometimes found. In the working examples 3 to 5 of the present embodiment, however, the test results were constantly good.

On the contrary, in the comparative examples 3 to 5, the test results were not good. That is, except for the V-ribbed belt 10 of the comparative example 4 in the pre-use state, where relatively less slippage and abnormal noise were found, slippage and abnormal noise were clearly found in all of the V-ribbed belts 10 of the comparative examples 3 to 5, regardless of pre- or post-use state.

From these test results, it is clear that adding 10 to 20 weight parts of diatomaceous earth to the 100 weight parts of rubber material in the rubber layer material (adding 5 to 10 weight percent of diatomaceous earth in the whole rubber layer material), further improves the anti-slippage property of the V-ribbed belt 10, and more reliably prevents the generation of an abnormal noise. It is considered that these effects are provided by the water-absorbent diatomaceous earth which efficiently removes the water which accumulates on the friction surface 12S (see Fig. 1) of the bottom rubber layer 12.

On the contrary, the V-ribbed belts 10 of the comparative examples 3 and 4 slip, due to the less diatomaceous earth and the lack of water-absorbency of the bottom rubber layer 12. In the comparative example 5, the V-ribbed belt 10 also slips, because the coefficient of friction of the friction surface 12S (see Table 2) becomes lower than required, from excessive addition of diatomaceous earth. It is considered that as a result, larger abnormal noises were generated in the comparative examples 3 to 5 than in the working examples 3 to 5.

Next, comparative examples 6 and 7 are explained. In these comparative examples, the average particle size of the diatomaceous earth differed from the 9µm of the working examples 3 to 5, and were instead 23.4µm and 43.6µm, respectively (see Table 2). In these comparative examples 6 and 7, generation of the slippage and abnormal noise were clearly found, regardless of the pre- or post-use state.

Therefore, diatomaceous earth with an average particle size smaller than or equal to 20µm (for example, as small as about 9 µm), is suitable for addition to the rubber layer material of the V-ribbed belt 10. The reasons for this are as follows. First, in the V-ribbed belt 10 which includes the diatomaceous earth of a smaller particle size, the amount of diatomaceous earth exposed on the friction surface 12S of the bottom rubber layer 12 (see Fig. 1) is greater than the V-ribbed belt 10 which includes the diatomaceous earth of larger particle size but same weight content. Secondly, smaller diatomaceous earth has greater surface area per unit weight content, so it has superior water absorbency than larger diatomaceous earth.

Next, comparative examples 8 and 9 are explained. These comparative examples corresponded to comparative example 1 plus diatomaceous earth, and the HAF carbon black was used in comparative examples 8 and 9. In these comparative examples 8 and 9, as well as the other comparative examples, generation of a slippage and an abnormal noise were clearly found, regardless of the pre- or post-use state of the V-ribbed belts 10.

These test results in the present embodiment also demonstrate that the FEF is more suitable than the HAF as a carbon black for addition to the rubber layer material.

Next, comparative examples 10 to 12 are explained. In these comparative examples, the amounts of added carbon black were less than in the other working and comparative examples, or no carbon black was added. By using the formulation of the comparative example 12 which includes no carbon black, a uniform rubber layer material was not produced, and the V-ribbed belt 10 could not manufactured. In the comparative examples 10 and 11, generation of a slippage and an abnormal noise were also clearly found, regardless of the pre- or post-use state of the V-ribbed belts 10.

Therefore, it is confirmed that when the additional amount of carbon black such as the FEF and HAF is reduced to about half of that in the above explained working and comparative examples, or reduced to nothing, good results are not obtained even when diatomaceous earth in an amount corresponding to the reduced amount of carbon black is added.

Next, comparative examples 13 and 14 are explained. In these comparative examples, zeolite was added to the rubber layer materials, unlike the other working examples. 15 weight parts of each of zeolite either with an average particle size of 0.2mm or of 1.25µm, was used (see Table 2). The only difference between the formulations of comparative examples 13 and 14 and that of comparative example 3, is the zeolite. In comparative examples 13 and 14, generation of a slippage and an abnormal noise were also clearly found, regardless of the pre- or post-use status of the V-ribbed belts 10.

As a result, in cases where zeolite is used instead of diatomaceous earth, no advantage is obtained. This may be because that zeolite has less water-absorbency than diatomaceous earth does, or due to the difference in the properties of the friction surfaces 12S of these examples and the others, such as unevenness.

As explained in the present embodiment, generation of a slippage and an abnormal noise of the V-ribbed belt 10 in the presence of water accumulated on the friction surface, can be reliably prevented by adding diatomaceous earth, an inorganic porous material, to the rubber layer material.

The materials of each member composing the V-ribbed belt 10, such as the bottom rubber layer 12, are not limited to those in either of the two embodiments. For example, because the carbon black with the average nitrogen adsorption surface area of the predetermined range can prevent belt slippage and resulting abnormal noises as explained above, XCF, GPF and so on may also be used as a reinforcement of the bottom rubber layer 12, in addition to the FEF and HAF used in the embodiments.

Although no graphite was used in the second embodiment (the working examples 3 to 5 and comparative examples 3 to 12), a suitable amount the graphite may be used to prevent the coefficient of friction of the friction surface 12S (see Fig. 1) from dropping below the required level.

Further, silica may be used instead of, or in addition to a carbon black, as a reinforcement.

Types of diatomaceous earths different from those of the embodiments may be used, such as ones having different average particle sizes.

Although there is an advantage to using a rubber made from the EPDM because of its generally superior anti-heat and anti-wear performance characteristics, the bottom rubber layer 12 may be made from a CR rubber, a hydrogenated nitrile rubber, a styrene-butadiene rubber, a natural rubber and so on. Note that a peroxide may be used instead of a sulfur for a crosslinking reaction of the EPDM and so on. Further, the rubber materials of the bottom rubber layer 12 of the present embodiments may be applied to a friction transmission belt other than the V-ribbed belt 10, such as a flat belt or a V-belt.

### Industrial Applicability

According to the present invention, a friction transmission belt which can prevent generation of an abnormal noise even when water has accumulated thereon, can be supplied.

## Claims

1. A friction transmission belt (10) comprising a rubber layer (12) having a friction surface, said rubber layer (12) having a friction surface; wherein
said rubber layer material comprising carbon black whose average nitrogen adsorption surface area (ASTM D1765-01) is between 40 and 49 m²/g, said rubber layer material making said friction surface uneven due to the addition of said carbon black to said rubber layer to drain water so that slippage of said friction transmission belt caused by water accumulating on said friction surface is prevented, **characterized in that** said rubber layer (12) further comprises a diatomaceous earth.

2. A friction transmission belt (10) according to claim 1, wherein said rubber layer (12) further comprises a short fiber (14).

3. A friction transmission belt (10) according to claim 1, wherein said rubber layer (12) comprises 10 to 20 weight parts of said diatomaceous earth per 100 weight parts of rubber material.

4. A friction transmission belt (10) according to claim 1, wherein the average particle size of said diatomaceous earth is smaller than or equal to 20µm.

5. A friction transmission belt (10) according to claim 1, wherein said rubber layer (12) is formed by a rubber comprising an EPDM (Ethylene Propylene Terpolymer).

6. A friction transmission belt (10) according to claim 1, further comprising an adhesive rubber layer (16) bonded to said rubber layer (12), and a tension member (18) embedded in said adhesive rubber layer (16).

## Patentansprüche

1. Reibungs-Transmissionsriemen (10), der eine Gummilage (12) mit einer Reibungsfläche umfasst, wobei die Gummilage (12) eine Reibungsfläche aufweist; wobei
der Gummilagenmaterial enthaltende Ruß, dessen mittlere Stickstoffabsorptionsfläche (ASTM D1765-01) zwischen 40 und 49 m²/g liegt, wobei das Gummilagenmaterial die Reibungsfläche aufgrund der Zugabe von Ruß zu der Gummilage ungleichmäßig macht, um Wasser ablaufen zu lassen, so dass ein Schlupf des Reibungs-Transmissionsriemens, der durch eine Ansammlung von Wasser auf der Reibungsfläche bewirkt werden würde, verhindert wird,
**dadurch gekennzeichnet, dass** die Gummilage (12) ferner eine Diatomeenerde enthält.

2. Reibungs-Transmissionsriemen (10) nach Anspruch 1, wobei die Gummilage (12) ferner eine Kurzfaser (14) umfasst.

3. Reibungs-Transmissionsriemen (10) nach Anspruch 1, wobei die Gummilage (12) 10 bis 20 Gewichtsanteile Diatomeenerde pro 100 Gewichtsanteilen Gummimaterial umfasst.

4. Reibungs-Transmissionsriemen (10) nach Anspruch 1, wobei die mittlere Partikelgröße der Diatomeenerde kleiner oder gleich 20 µm ist.

5. Reibungs-Transmissionsriemen (10) nach Anspruch 1, wobei die Gummilage (12) durch einen Gummi gebildet ist, der ein EPDM (Ethylen-Propylen-Terpolymer) enthält.

6. Reibungs-Transmissionsriemen (10) nach Anspruch 1, der ferner eine adhäsive Gummilage (16), die an die Gummilage (12) geklebt ist, und ein in die adhäsive Gummilage (16) eingebettetes Spannelement (18) umfasst.

## Revendications

1. Courroie de transmission à friction (10) comprenant une couche de caoutchouc (12) comportant une surface de friction, ladite couche de caoutchouc (12) comportant une surface de friction ; dans laquelle
le matériau de ladite couche de caoutchouc comprenant du noir de carbone dont l'aire de surface moyenne déterminée par adsorption d'azote (ASTM D1765-01) est de 40 à 49 m²/g, le matériau de ladite couche de caoutchouc rendant ladite surface de friction irrégulière dû à l'addition dudit noir de carbone à ladite couche de caoutchouc pour l'évacuation de l'eau de telle sorte que le glissement de ladite courroie de transmission à friction causé par l'accumulation d'eau sur ladite surface de friction soit prévenu, **caractérisée en ce que** la dite couche de caoutchouc (12) comprend en outre une terre de diatomées.

2. Courroie de transmission à friction (10) selon la revendication 1, dans laquelle ladite couche de caoutchouc (12) comprend en outre une fibre courte (14).

3. Courroie de transmission à friction (10) selon la revendication 1, dans laquelle ladite couche de caoutchouc (12) comprend 10 à 20 parties en poids de ladite terre de diatomées par 100 parties en poids de matériau caoutchouc.

4. Courroie de transmission à friction (10) selon la revendication 1, dans laquelle la taille de particule moyenne de ladite terre de diatomées est inférieure ou égale à 20 µm.

5. Courroie de transmission à friction (10) selon la revendication 1, dans laquelle ladite couche de caoutchouc (12) est formée d'un caoutchouc comprenant un EPDM (terpolymère d'éthylène propylène).

6. Courroie de transmission à friction (10) selon la revendication 1, comprenant en outre une couche de caoutchouc adhésive (16) collée à ladite couche de caoutchouc (12), et un élément de tension (18) intégré dans ladite couche de caoutchouc adhésive (16).
